# EUROPEAN PATENT APPLICATION

(11) **EP 1 653 116 A2**
(43) Date of publication of application: **03.05.2006**
(21) Application number: 05109396.1
(22) Date of filing: 10.10.2005
(51) Int. Cl.: F16F 9/02, F16F 9/36

(54) **Air spring with guided stroke feature**

(30) Priority: 19.10.2004 IT PN20040074
(71) Applicant: Bordignon, Silvano, 36027 Rosà (VI) (IT)
(72) Inventor: Bordignon, Silvano, 36027 Rosà (VI) (IT)
(74) Representative: Giugni, Valter

(57) **Abstract**

Air spring comprising an outer casing, an actuating rod connected to an inner piston that is adapted to slide into a variable-volume chamber in said outer casing, wherein said rod is provided with an inner cavity and said piston is in turn provided with a corresponding through-cavity, said cavities communicating both with each other and with said variable-volume chamber. There are provided cylindrical guide means that are firmly applied on to the bottom of the variable-volume chamber and are oriented towards the inner space of said cavities in the piston and the rod; these guide means are formed so that the outer surface thereof is adapted to get inserted, i.e. slide into said two cavities under an adequately tight-fitting coupling relative to the inner surfaces thereof, so as to guide the movement thereof when the rod and the piston are inserted in the hollow casing.

## Description

The present invention refers to a gas spring that has been so designed, and provided with such characteristics, as to make it particularly suitable for use in conjunction with sheet-metal forming presses, or anyway in such applications requiring heavy-duty, continuous cycles of operation.

Known in the art are various kind of gas springs that are provided with at least a piston adapted to perform as a damping, elastic member under a sudden load, and adapted to enable such piston to regain the initial working position thereof, when such load condition comes to an end.

These springs have been improved in a number of different manners throughout these last few years, in view of optimizing the operating pattern thereof under the different operating conditions typically found in the various kinds of application in which the springs themselves are due to be used. However, the solutions that have been found up to now in this connection, while generally effective in reaching the above-indicated target, are still far from being capable of being considered satisfactory to such effect as far as a particular kind of use thereof is concerned.

Particular reference is made here to the not so uncommon case of a spring which, further to having to bear the regular, alternate load acting on the rod thereof, and, for the matter, in a direction that is exactly parallel to the direction of movement of the same rod within the related cylinder, is also subject to a load having a transverse component relative to said direction.

This circumstance gives rise to a number of problems that are not so easily solved, since - by their own constitution - gas springs are designed so as to bear and withstand axial loads, which means that - as in the case of a piston of any kind that is provided to slide reciprocatingly within a respective cylinder - these devices are inherently weak and practically unprotected against transversally acting loads or stresses.

In view of overcoming such problems connected with the possibility of withstanding even transversally acting loads in a gas springs, only a single solution - altogether trivial in itself - has been found hitherto, consisting in making use of oversized and overdesigned gas springs.

It can be readily appreciated that such practice is far from being a really effective solution to the above-cited problem, since it most obviously generates a considerable amount of additional costs, while proving just a kind of stopgap expedient that fails to tackle the problem at the root thereof.

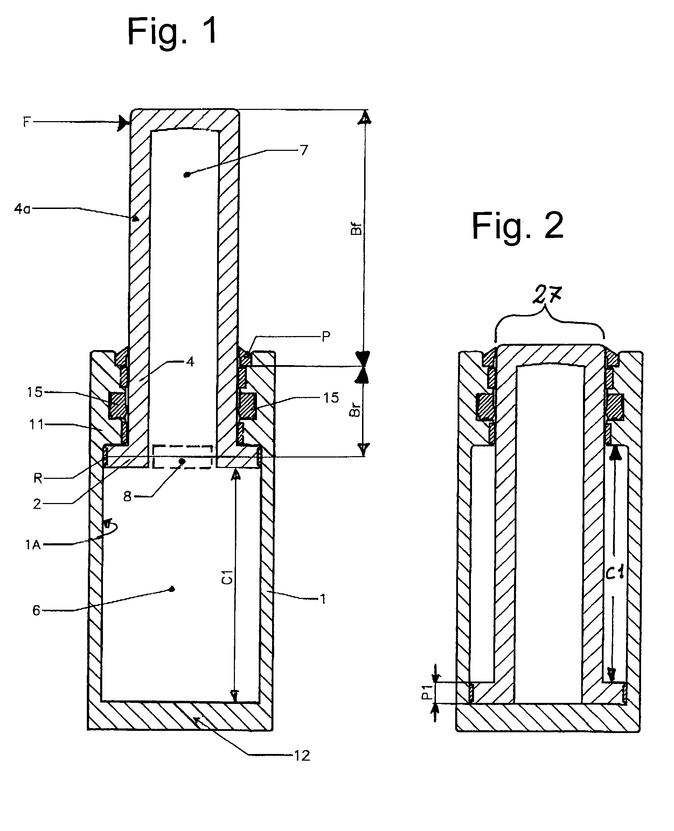

Reference should now be made to Figure 1. If a load including also a transverse component F is applied on to the spring illustrated in this Figure, said load practically converts the rod of the springs into a first-class lever, in which, further to the point at which the force F acts - there cab be identified the fulcrum or point of rotation P of said lever, which comes to lie approximately at the upper edge of the bore in which the rod slides, and the point of resistance R, which comes to lie approximately at the point or zone at which the cylindrical rim of the piston is press-fitted against the corresponding portion of the sealed cylinder, within which the same piston is sliding.

Quite apparent is the fact that - since the lever arm of force B_{f} is much greater than the arm of resistance Bᵣ - the force acting upon said point of resistance R is considerably increased as compared with the original force F, so that the most obvious result is that the rod tends to deflect or - in the case that the same rod is very rigid - it is either the guide ring surrounding the piston or the seal rings covering the inner surface of the rod sliding bore - or even both of them - that has/have to stand the resisting load.

Most obviously, the ultimate result is a quick wear-down of the spring, with an equally quick loss in efficiency.

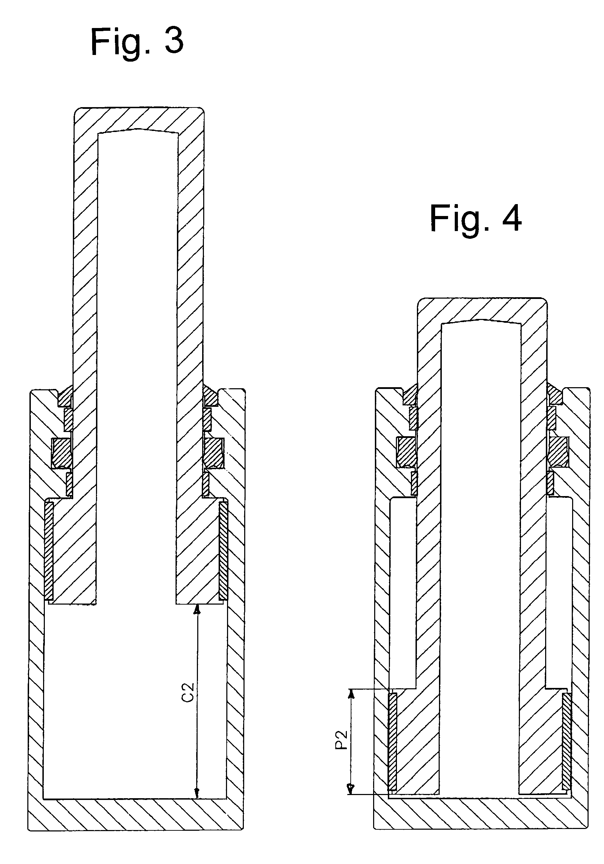

In view of solving this problem, a spring having similar characteristics, features and outer dimensions may be modified as illustrated in Figure 3, in which it can be noticed that the height of the piston is considerably increased, from a value P1 in Figure 2 up to a value P2 in Figure 4.

This is obviously effective in making the piston more robust, since the force acting upon the guide ring is distributed over a much larger surface.

This solution, however, cannot do away with a price having to be paid in functional terms; in fact - with reference to Figure 2 illustrating the spring of Figure 1 in a fully compressed state, and where the stroke thereof is indicated at C1 - it can be noticed that, when it is fully compressed as shown in Figure 4, the corresponding, but not similar spring shown in Figure 3 allows for at the most a stroke reduced to C2, owing to the most readily appreciable fact that, if the inner space of the cylinder remains unaltered and the height of the piston is increased by a given extent, the result is that it is stroke length of the piston itself that has necessarily to be reduced by a same extent.

Such reduction in the effective length of the piston stroke is usually unacceptable, so that the above-cited problem practically fails to be solved to any satisfactory extent.

Known from the Italian patent application No. PN2004A000003 is a gas spring provided with an elongated member that is applied on to the bottom base thereof and oriented towards the compression chamber; this member is adapted to get alternately inserted in a suitable bore provided both in the piston and the rod, and has the task of controlling and regulating the flow rate of the gas between each other of the volumes inside the valve, with the ultimate result of a controlled return movement, or backstroke, of the piston and, therefore, of the same rod.

Neither this solution, however, proves fully adequate as far as its effectiveness in doing away with the above-mentioned problem is concerned, and this owing to a substantial contradiction: in fact, if the elongated member getting inserted in the corresponding bore in the piston and the rod has also to act as a guide member, in the form of a kind of runner or rail controlling the lateral deviations of the piston, then the clearance that must be ensured between the elongated member and the bore is in fact nullified, with the result of practically invalidating the control characteristics of the return or back stroke of the rod; if said spring is on the contrary used in exactly the same way and to exactly the same purpose as described afore, then said clearance must be maintained, thereby practically preventing said elongated member from being assigned also the task of controlling the horizontal deviations of the piston.

It would therefore be desirable, and it is actually a main object of the present invention, to provide a solution for creating gas springs, as especially adapted to be used in conjunction with heavy-duty metal forming applications, comprising a compression rod, a working piston and a cylinder adapted to slidably receive and accommodate said working piston, and provided with means adapted to prevent possible loads including transversally acting components, which may act upon the rod during the compression stroke, from being capable of being transferred directly from the same rod to both the guide or seal rings surrounding the bore through which said rod passes, and the guide/seal rings surrounding the circular perimeter of the piston and ensuring a tight-sealing effect between the same piston and the cylinder.

These aims, along with other features of the present invention, are reached in the gas springs that are made and operating as recited in the appended claims. Features and advantages of the present invention will anyway be more readily and clearly understood from the description that is given below by way of non-limiting example with reference to the accompanying drawings, in which:
- Figures 6 and 7 are median sectional views passing through the axis of a first embodiment of a gas spring according to the present invention, in respective operating states thereof;
- Figures 8, 9 and 10 are corresponding median sectional views of three different embodiments, respectively, of a gas spring according to the present invention;
- Figure 11 is a median sectional view of a basic part of a gas spring according to the present invention.

With reference to Figure 1, a gas spring according to the prior art is essentially comprised of:
- a hollow cylindrical casing 1, provided with an upper base 11 and a lower or bottom base 12,
- a piston 2 accommodated inside said hollow cylindrical casing 1 and adapted to slide therein in a fluid-tight manner relative to the inner walls thereof, this piston being connected to a stem or rod 4 that is rigidly applied to said piston 2 on a side thereof, and is adapted to be alternately displaced inwards and outwards relative to said hollow cylinder 1 consistently with the displacement of said piston 2.

It should however be noticed that in a number of embodiments of such gas springs, the piston 2 is not provided so as to fit in a tightly sealing manner against the inner walls of the hollow cylindrical casing, but is rather fully suppressed, i.e. done away with, since the task it is called to perform, i.e. reducing the inner volume of the hollow cylindrical casing, is automatically and inherently made superfluous by the fact that it is the rod itself that brings about the required volume reduction.

In this case, the need for the same rod to be retained inside the hollow cylindrical casing at the end of the release or raising stroke of the rod, i.e. a need which in the case of an actual piston is complied with by causing the upper portion of the piston to come into abutting against a corresponding portion of the upper base 11, cannot be coped with by the piston itself, since it is not available there any longer.

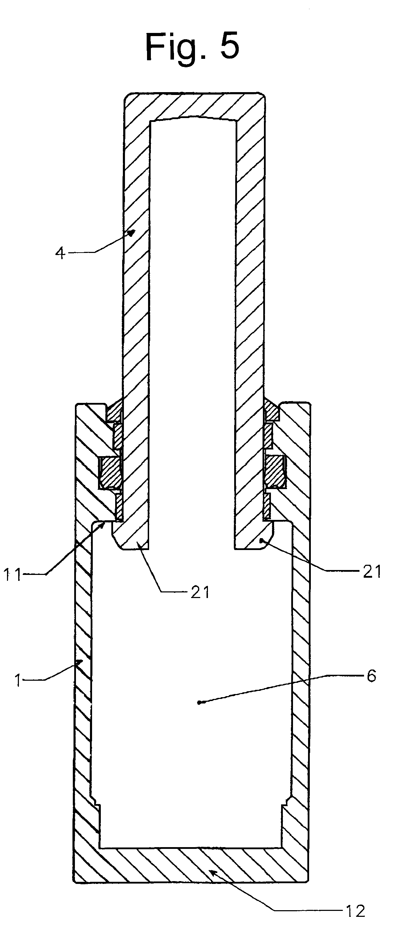

In such case, and with reference to Figure 5, there is provided an appropriate relief 21 located on the inward end portion of the rod and expanding radially, so that said end portion is enabled to appropriately engage the inner face of the upper base 11 when the rod reaches up to the end of the release or raising stroke thereof.

This variation in the basic construction of a gas spring does however not have any relevance to the purposes of the present invention, so that reference will be made - both hereinafter and in the appended claims - to a piston that may also be of a "not tightly sealing type", this being precisely meant to include cases as the above-described one.

A gas spring according to the prior art, as illustrated in the above-cited Figures, further includes:
- a rod 4 rigidly connected with an end portion thereof to a middle portion of said piston and passing through the bore 27 of said upper base 11 so as to have a portion 4a thereof projecting outwards from said hollow casing, and
- a variable-volume chamber 6 as substantially delimited by:
   >> said lower base 12,
   >> the inner cylindrical wall 1A of said hollow casing 1, and
   >> a portion of said upper base 11 or, alternatively, said piston, in the case that the latter is a tightly sealing type of piston (bearing in mind the above-noted comment).

The rod is further provided with an inner cylindrical cavity 7, and said piston is provided with a corresponding through-cavity 8, so that these two cavities are capable of communicating with both each other and said variable-volume chamber 6.

In addition, said rod is adapted to slide in a fluid-tight manner relative to said bore 27, preferably through the provision of seal rings 15 provided on the inner wall of said bore (Figure 1).

Said cavities 7 and 8 must be identical in the cross-sectional shape thereof; furthermore, they are preferably cylindrical and coaxial, and have the same diameter, so that they are capable to practically form a single cylindrical cavity opening into said variable-volume chamber.

What has been described up to this moment is a gas spring according to the prior art, i.e. of a traditional type.

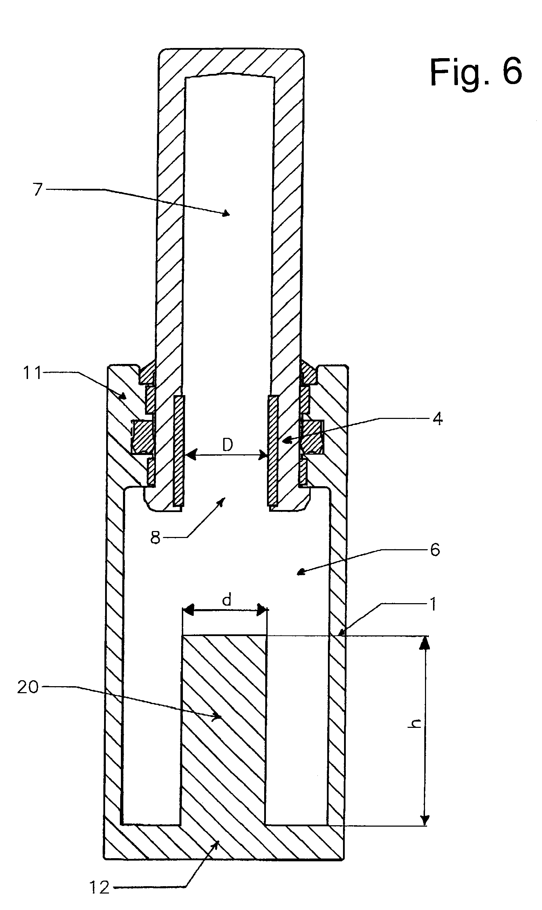

Now, according to the present invention, and with particular reference to Figure 6, on the lower base 12 of the gas spring - and oriented towards said variable-volume chamber 6 - there is provided a cylindrical guide member 20, the features of which are as follows:
- it is coaxial with the axis of said two cavities 7 and 8,
- it is firmly joined on to the inner surface of said lower base 12,
- has an outside diameter d that is just slightly smaller than the inside diameter D of said single cylindrical cavity formed by said two cavities 7 and 8,
- has a height h from said lower base 12 that is sufficient to ensure that, when the rod is inserted in the cylindrical casing 1, the guide member 20 is automatically led into said two cylindrical cavities 7 and 8, which, owing to the way in which they are sized relative to each other, are capable of sliding around and along said member, without any significant mechanical clearances having however to be provided to that purpose.

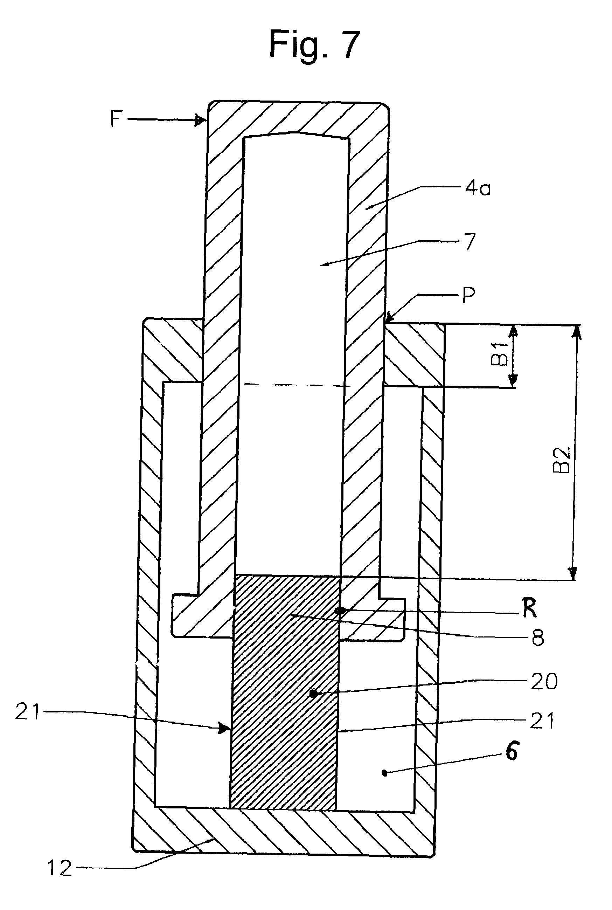

It is therefore fully apparent that in the final portion of the compression stroke illustrated in Figure 7, this rod, and possibly even the piston, if any, is retained by both the edges of said bore 27, owing to the outer surface of said rod engaging said edges, and - in the outermost lower portion thereof - said guide member 20, owing to the portion of inner surface of the cavities 7 and 8 slidably engaging against the outer cylindrical surface 21 of said member 20.

As a result, and with particular reference to Figure 7, the lever arm resisting against a force F that acts upon said rod changes from B 1 to B2, i.e. to a far greater value, thereby enabling any lateral deviation or deflection of the rod to be opposed and stopped in a much more effective and almost definitive manner.

For reasons of greater simplicity, the lever arm B 1 is calculated with respect to a fulcrum or pivot point P of the lever at the outer entrance opening of the rod, whereas in the embodiment of the present invention shown in Figure 7, the point of resistance is assumed to lie at the point R, i.e. in the upper portion of said guide member 20, where the greatest resisting force is assumed to concentrate.

Such assumptions, although not fully applying or true in a strict sense, can anyway be considered as perfectly viable from a quantitative point of view and, in all cases, these approximations involve maximum deviations of such a modest extent as to never prove impairing as far as the advantages of the present invention are concerned.

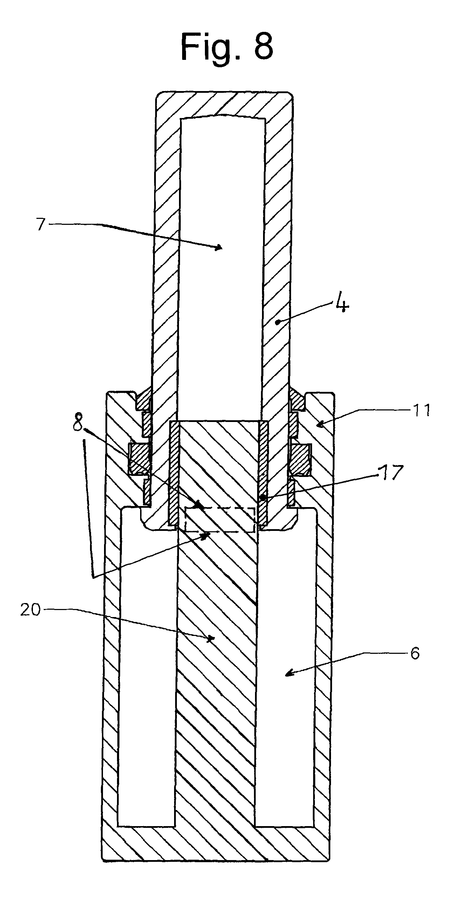

Various improvements are furthermore allowed for within the scope of the present invention. A first such improvement relates to the length of said guide member 20; with reference to Figure 8, this guide member 20 is provided with such a length - as extending towards the interior of the variable-volume chamber 6 - as to be able to be contained within said two cavities 7 and 8 regardless of the actual position of the rod 4 and, in particular, even when said rod is in the full-out position thereof. In Figure 8, the cavity 8 shall be intended as representing a geometrical space of its own, rather than a cavity provided in the member 20.

Such improvement enables said cylindrical guide member 20 to be prevented from having to fit into the cavities 8 and then 7 at every working cycle thereof, since it remains slidably engaged against said cavities constantly.

The advantage of such solution lies in the fact that it enables the quite real risk to be avoided that even a modest force acting transversally upon the rod 4 may cause the trajectory of the inward portion of the rod to deviate so as to be eventually brought to interfere against the upper edge of said guide member 20, with easily and readily imaginable consequences from a functional point of view.

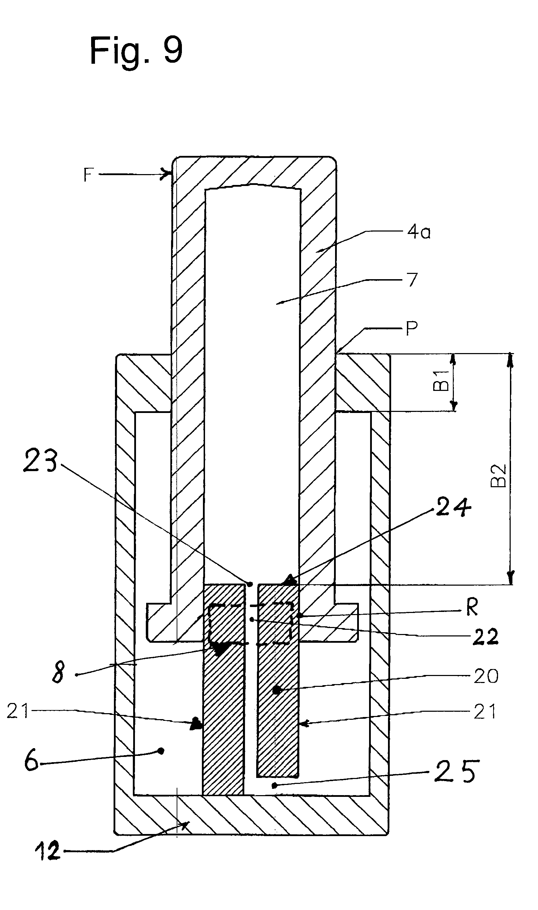

With reference to Figure 9, a second improvement consists in providing a through-conduit 22 in the interior of said guide member 20, wherein such conduit 22 has a first mouth 23 thereof in the upper surface 24 of said guide member, and a second mouth 25 thereof in the lower portion of the outer surface 21 of said guide member 20.

This through-conduit 22 enables said variable-volume chamber 6 to establish a communication with said two communicating cavities 7 and 8 provided in the rod and the piston, respectively, when these are lowered to a level at which they are sealed, i.e. plugged downwards by the guide member 20. This expedient practically enables the result to be obtained that, even in the case that said guide member 20 acts as a "plug", said cavities will never become tightly or fully sealed, since they remain anyway communicating with the variable-volume chamber 6.

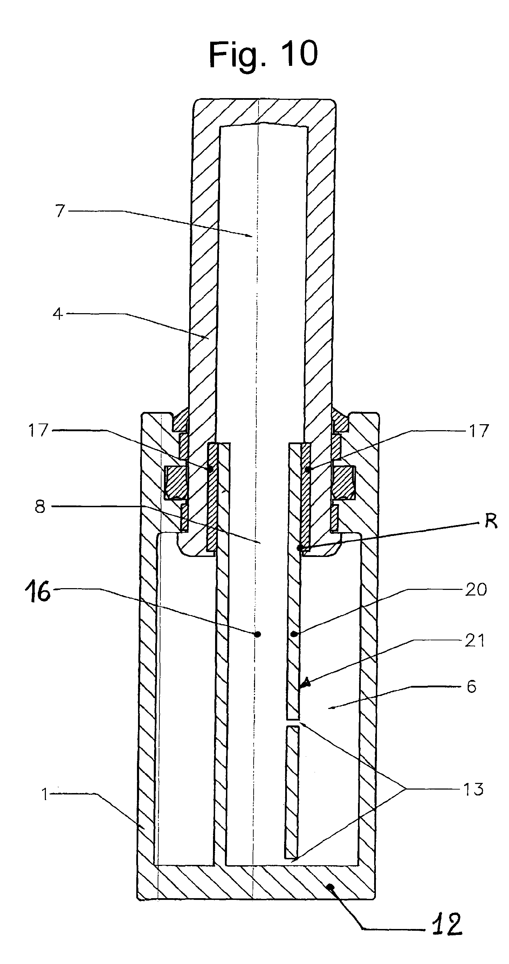

With reference now to Figure 10, a third improvement derives from the fact that said guide member 20 is not solid, but rather hollow internally, thereby featuring a cavity 16 opening into the cavity 7 in said rod.

This modified embodiment enables the operating flexibility of the present invention to be further increased, since the characteristics of the spring can be calibrated to a much greater and wider extent by also providing a correspondingly and appropriately sized cavity 16.

In view of further enhancing the operating flexibility of the spring according to the present invention, again with reference to Figure 10 between said inner cavity 16 of the guide member 20 and the variable-volume chamber 6 there is provided an appropriate through-opening 13 that enables the two chambers to communicate with each other at least up to the moment at which said through-opening is "plugged" by the rod 4 moving.

Furthermore, if said through-opening 13 is provided in the portion of said guide member 20 that is more close or adjacent to said lower or bottom base, then the operating flexibility of a spring according to the present invention turns out as being further enhanced, since in this particular case the presence of a guide member 20 would not affect or modify the operating mode of the same spring to any significant extent, as compared with the operating mode of a similar spring not provided with such guide member 20.

The above-described solutions can be themselves further improved through the provision of a slip ring 17 (which does not necessarily need to be also a seal ring, since a sealing effect is practically superfluous and, therefore, not required in some applications) as shown in Figures 8 and 10, in which this ring is applied between the inner surface of the cavity 7 in the rod 4 and the outer surface 21 of the guide member 20; this ring 17 - of a type as widely known as such in the art - is effective in improving the capability of the rod 4 of sliding against the guide member 20 by reducing friction resistances, thereby avoiding possible, clearly undesired seizures and overheating effects.

In an advantageous manner, said slip-ring member 17 is applied on to the lower internal portion of said cavities 7 and 8, in order to ensure that said point of resistance R is localized on said member and, as a result, the distance between said point R and the point, at which said fulcrum or pivot P is positioned, is ultimately magnified to the utmost extent.

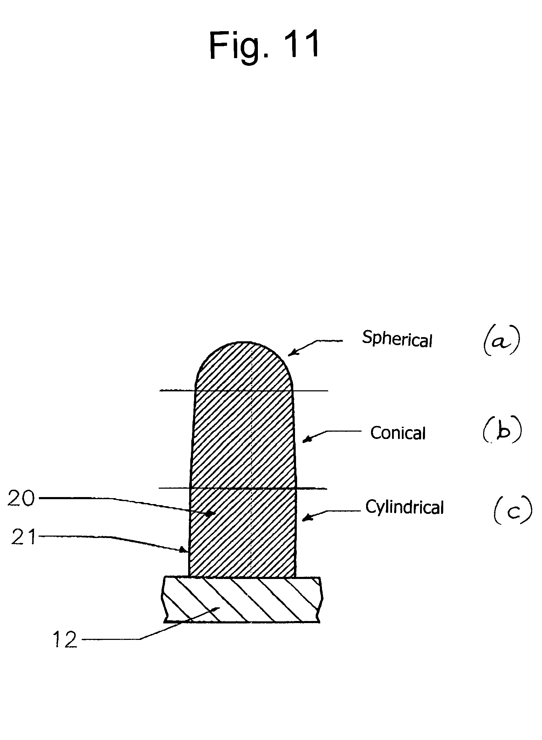

The solutions illustrated in the afore-cited Figures allow anyway for a further improvement: in fact, in all these cases there cannot be excluded that, during the downstroke thereof, the piston 2 or the rod 4, depending on the particular case, can jam, i.e. get stuck against an upper edge of the guide member 20, owing for instance to an excessive force acting transversally upon the outer portion of the rod 4 and causing the latter to also incline relative to the guide member 20; in this case, such problem can be easily overcome if the upper portion of the guide member 20 is given a variously tapered shape. In this way, a kid of permanent "lead-in" feature is provided between the two elements that are due to couple with each other, thereby ensuring that any possible small interference therebetween is automatically compensated for by the fact that the two surface come no longer in contact frontally with each other, but rather in a markedly oblique, i.e. glancing manner. Said upper portion may be given a frusto-conical, hemispherical or any similar shape; a preferred solution in this connection is represented in Figure 11, in which it can be noticed that the upper portion of the guide member 20 is in the shape of a hemisphere on top (a), then goes on with a regular tapering, substantially frusto-conical pattern (b), after which the guide member 20 recovers its regular cylindrical shape down to the point where it joins the lower or bottom base 12.

The above description of a gas spring according to the present invention has been given by mere way of example to illustrative purposes, without any particular regard to either its shape or the shape and mutual arrangement of the various members involved. It is however readily apparent that the present invention is most favourably embodied in the form of a gas spring that, for strictly construction-related reasons, is made with the inner wall of said variable-volume chamber 6 featuring a cylindrical shape, exactly as said piston, said rod, said cavity in said rod and both the inner and outer walls of said guide means, all said cylindrical members being further coaxial with each other.

## Claims

1. Gas spring, in particular of the type used in sheet-metal forming presses, comprising:
- a hollow, preferably cylindrical casing (1) having an upper base (11) and a lower base (12) arranged opposite and parallel relative to each other, in which the upper base (11) is provided with a bore (27),
- a piston (2) adapted to slide in an either fluid-tight or non-tight condition within said hollow casing, said upper base (11) forming an abutment member preventing said piston from sliding out of said hollow casing,
- a rod (4) rigidly fixed with an extremity thereof to a central portion of said piston and passing through said bore (27) in said upper base (11), so as to have a portion (4a) thereof protruding outside from said hollow casing,
- a variable-volume chamber (6) as substantially delimited by:
>> said lower base (12),
>> the inner cylindrical wall (1A) of said hollow casing (1), and
>> a portion of said upper base (11) or, alternatively, said piston, in the case that the latter is a tightly sealing type of piston,
- said rod (4) being further provided with an inner cavity (7), and said piston being in turn provided with a corresponding through-cavity (8), so that these two cavities are capable of communicating with both each other and said variable-volume chamber (6) on the side of said piston facing said lower base (12),
- said rod being further adapted to slide in a fluid-tight manner relative to said bore (27),
**characterized in that** there are provided guide means (20) that are firmly joined on to the inner surface of said lower base (12) and oriented towards the interior space of said cavities (8, 7) in said piston and said rod.

2. Gas spring according to claim 1, **characterized in that** said guide means (20) have such a cross-sectional shape (d) as to enable the outer surface thereof to slidably enter the interior (D) of said two cavities (8, 7) in said piston and said rod under an adequately close-fitting coupling therewith, so as to guide the movement of said rod and said piston when these are inserted into said hollow casing (1).

3. Gas spring according to claim 2, **characterized in that** said guide means (20) extend into the cavities (7, 8) in said rod and said piston by such a length (h) as to be enabled to remain along the inner surface of said cavities when said rod is in the full-out position thereof (Figures 8, 9).

4. Gas spring according to any of the preceding claims, **characterized in that** inside said guide means (20) there is provided a through-conduit (22) provided with two mouths (23, 25) opening in the upper surface (24) and the outer side surface (21), respectively, of said guide means (20) so as to connect said two intercommunicating cavities (7, 8) with said variable-volume chamber (6) during at least a portion of the stroke of said rod (4).

5. Gas spring according to any of the claims 1 to 3, **characterized in that** said guide means (20) are provided with an inner cavity (16) opening with two mouths (23, 25) thereof towards a respective one of said cavities (7, 8) in said rod (4) and said piston (2).

6. Gas spring according to claim 5, **characterized in that** between said variable-volume chamber (6) and said inner cavity (16) in said guide means (20) there is provided a through-opening (13).

7. Gas spring according to claim 6, **characterized in that** said through-opening (13) is provided in a portion of said guide means (20) that is adjacent to said lower or bottom base (12).

8. Gas spring according to any of the preceding claims, **characterized in that** between said guide means (20) and the inner wall of said cavities (7, 8) in said rod and/or said piston there is provided a slip-ring type member (17) firmly attached to the end portion of said rod (4) and/or said piston (2) that is facing said lower or bottom base (12).

9. Gas spring according to any of the preceding claims, **characterized in that** the portion of said guide means (20) arranged towards said rod and adapted to be inserted in said inner cavity (16) has a tapered shape at the end portion thereof.

10. Gas spring according to claim 3, **characterized in that** said tapering comprises a hemispherically shaped section (a), a contiguous frusto-conically shaped section (b), which joins into the cylindrical main body (c) of said guide means.

11. Gas spring according to any of the preceding claims, **characterized in that** the inner wall of said hollow casing (1), said piston, said rod, said cavity in said rod, the inner and outer walls of said guide means (20) are in a cylindrical shape and are arranged coaxially with each other.
